# FASCICULE DE BREVET EUROPEEN

(11) **EP 2 257 424 B1**
(45) Date de publication et mention de la délivrance du brevet: **30.10.2013**
(21) Numéro de dépôt: 09723227.6
(22) Date de dépôt: 16.03.2009
(51) Int. Cl.: B32B 1/00, B32B 3/08

(54) **PRODUIT STRATIFIE COMPOSITE**
ZUSAMMENGESETZTES LAMINATPRODUKT
COMPOSITE LAMINATE PRODUCT

(30) Priorité: 19.03.2008 FR 0851757
(43) Date de publication de la demande: 08.12.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DELFINO, Antonio, CH-1772 Grolley (CH); HERAULT, Richard, F-69740 Genas (FR); MERALDI, Jean-Paul, CH-8049 Zurich (CH)
(74) Mandataire: Ribière, Joel
(86) Numéro de dépôt international: PCT/EP2009/001884
(87) Numéro de publication internationale: WO 2009/115254

(56) Documents cités:
- WO-A-2007/137858
- FR-A- 2 297 144
- GB-A- 191 221 272
- US-A- 2 206 230

## Description

### DOMAINE DE L'INVENTION

La présente invention est relative à des produits stratifiés, c'est-à-dire à des produits faits de plusieurs couches ou bandes de forme plane ou non plane qui sont reliées entre elles, par exemple du type cellulaire ou nid d'abeilles.

L'invention est plus précisément relative à des produits stratifiés dont la forme géométrique spécifique permet l'obtention d'une structure cellulaire déformable utilisable comme poutre résistante aux efforts en flexion-compression, en particulier lorsque ces produits stratifiés sont des produits composites dont tout ou partie est constituée de fibres enrobées dans une matrice de résine.

L'invention se rapporte également aux bandages ou aux roues élastiques (flexibles) pour véhicules automobiles du type « non-pneumatiques », c'est-à-dire ne nécessitant pas de gaz de gonflage tels que l'air pour prendre leur forme utilisable.

### ETAT DE LA TECHNIQUE

Les bandages ou roues flexibles non pneumatiques sont bien connus de l'homme du métier. Ils ont été décrits dans de très nombreux documents brevets, par exemple dans les brevets ou demandes de brevet EP 1 242 254 (ou US 6 769 465), EP 1 359 028 (ou US 6 994 135), EP 1 242 254 (ou US 6 769 465), US 7 201 194, WO 00/37269 (ou US 6 640 859), WO 2007/085414.

De tels bandages non pneumatiques, lorsqu'il sont associés à tout élément mécanique rigide destiné à assurer la liaison entre le bandage flexible et le moyeu d'une roue, remplacent l'ensemble constitué par le bandage pneumatique, la jante et le disque tels qu'on les connaît sur la plupart des véhicules routiers actuels.

En particulier, le brevet US 7 201 194 précité décrit un bandage non pneumatique, supporté structurellement (i.e., sans pression interne), qui a pour caractéristique essentielle de comporter une bande annulaire de renfort qui supporte la charge sur le bandage et une pluralité d'éléments de support ou rayons, à très faible rigidité de compression, qui travaillent en tension pour transmettre les efforts entre la bande annulaire et le moyeu de la roue.

Cette bande annulaire (ou bande de cisaillement) comporte deux membranes formées de câblés essentiellement inextensibles, enrobés de caoutchouc naturel ou synthétique, séparées par une couche de cisaillement elle-même en caoutchouc. Le principe de fonctionnement d'une telle bande est que le module de cisaillement de la couche de cisaillement est très nettement inférieur au module en extension des deux membranes, tout en étant suffisant pour pouvoir transmettre correctement les efforts d'une membrane à l'autre et faire travailler ainsi ladite bande en cisaillement.

Grâce à cette bande annulaire, il est possible de fabriquer des bandages ou roues non pneumatiques, aptes à rouler dans des conditions sévères ou agressives sans risque aucun de crevaison et sans l'inconvénient de devoir maintenir une pression d'air à l'intérieur du bandage.

En outre, comparativement aux bandages non pneumatiques de l'art antérieur, est obtenue ici une pression de contact au sol qui est plus uniformément répartie, d'où un meilleur travail du bandage, une tenue de route et une résistance à l'usure améliorées.

Toutefois, une telle bande de cisaillement en caoutchouc n'est pas dépourvue d'inconvénients.

Tout d'abord, aux températures usuelles d'utilisation, par exemple entre - 30°C et + 40°C, elle est relativement hystérétique, c'est-à-dire qu'une partie de l'énergie fournie pour le roulage est dissipée (perdue) sous forme de chaleur. Ensuite, pour des températures d'utilisation notamment plus basses, comme celles que l'on peut trouver par exemple dans des zones géographiques du type polaires, typiquement inférieures à - 50°C voire moins, il est bien connu que le caoutchouc devient rapidement fragile, cassant et donc inutilisable. Sous de telles conditions extrêmes, on comprend d'autre part que des fluctuations plus ou moins larges et rapides de température, combinées par exemple à des contraintes mécaniques relativement élevées, peuvent aussi entraîner des problèmes d'adhésion entre les deux membranes et la couche de cisaillement, avec un risque de flambage localisé de la bande de cisaillement au niveau des membranes et une endurance finalement dégradée.

### BREVE DESCRIPTION DE L'INVENTION

Poursuivant leurs recherches, les Demanderesses ont trouvé un produit stratifié nouveau, utilisable notamment comme bande de cisaillement dans des bandages ou roues non pneumatiques tels que décrits ci-dessus, qui permet de pallier au moins en partie les inconvénients précités.

Ainsi, selon un premier objet, la présente invention concerne un produit stratifié formant une structure cellulaire déformable, caractérisé en ce qu'il comporte au moins :
○ une bande supérieure et une bande inférieure orientées toutes deux selon une même direction principale (X) ;
○ entre les deux bandes et connectant ces dernières en des zones dites zones d'ancrage, une série s'étendant dans la direction X, de structures cylindriques dites structures cylindriques de connexion, lesdites structures cylindriques de connexion étant non jointives selon la direction X,
et en ce que chaque structure cylindrique de connexion comporte une pluralité de (c'est-à-dire deux ou plus de deux) cylindres élémentaires, préférentiellement concentriques, ayant leur génératrice orientée selon un axe Y perpendiculaire à la direction X, lesdits cylindres élémentaires étant emboîtés les uns dans les autres et interconnectés entre eux dans chaque zone d'ancrage.

Ce produit stratifié de l'invention possède une structure cellulaire déformable, très aérée, qui s'est révélé présenter, de manière inattendue, une résistance élevée aux efforts en flexion et/ou compression et une haute endurance à de tels efforts répétés ou alternés. Il présente l'avantage d'être non hystérétique.

Selon un mode de réalisation préférentiel de l'invention, ce produit stratifié est un produit stratifié composite dont au moins les cylindres élémentaires, constitutifs des structures cylindriques de connexion, comportent des fibres noyées dans une matrice de résine.

En outre, selon un mode de réalisation particulièrement préférentiel, lorsque ces cylindres élémentaires et les bandes supérieure et inférieure sont tous constitués d'un matériau composite à base de fibres (en particulier de verre et/ou de carbone) noyées dans une résine thermodurcissable du type polyester ou vinylester, ce produit stratifié composite s'est révélé par ailleurs non seulement capable de résister à des températures extrêmement basses mais aussi apte à être utilisé dans un très large gamme de températures, s'étendant typiquement de - 250°C jusqu'à + 150°C.

L'invention concerne également l'utilisation d'un tel produit stratifié comme élément de construction de tout produit fini, ainsi que tout produit fini comportant un produit stratifié conforme à l'invention.

Elle concerne particulièrement l'utilisation d'un tel produit stratifié comme élément de renforcement d'un bandage ou d'une roue non pneumatique, en particulier comme bande de cisaillement d'un tel bandage ou d'une telle roue.

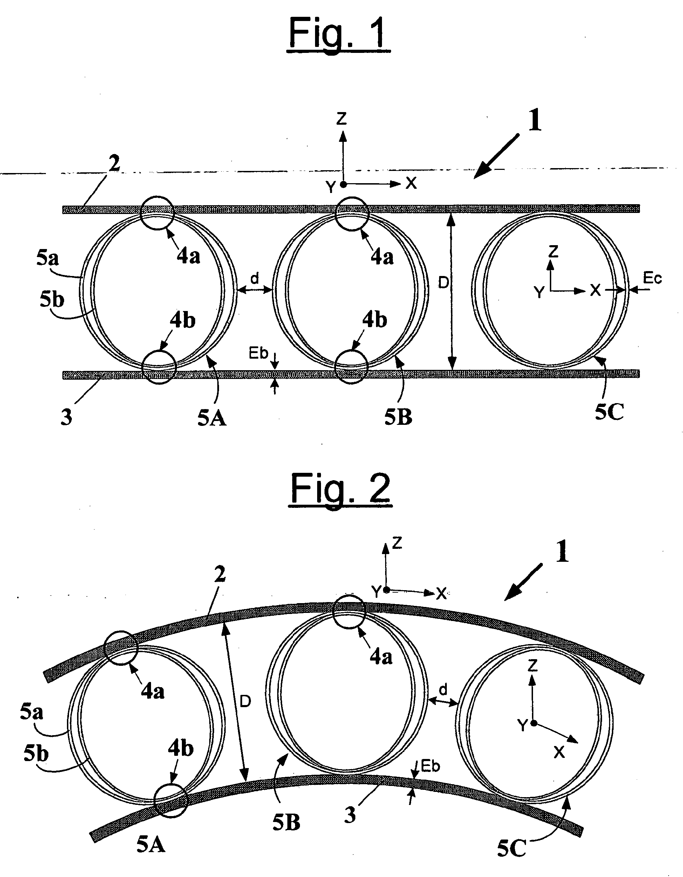

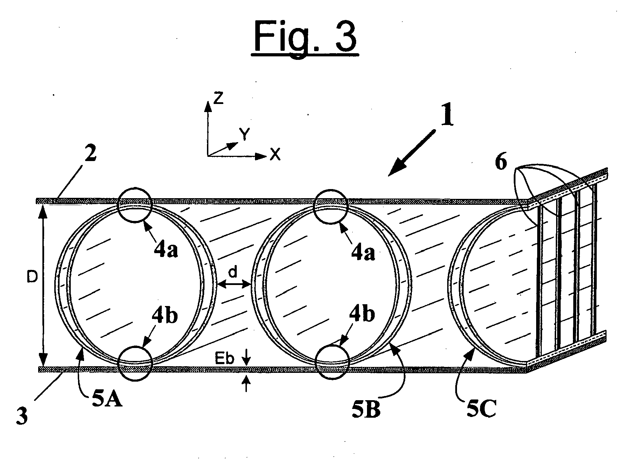

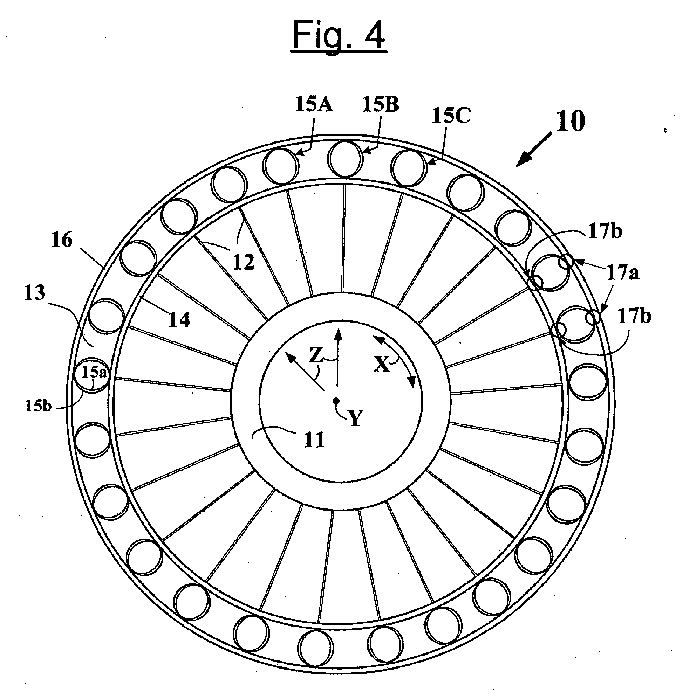

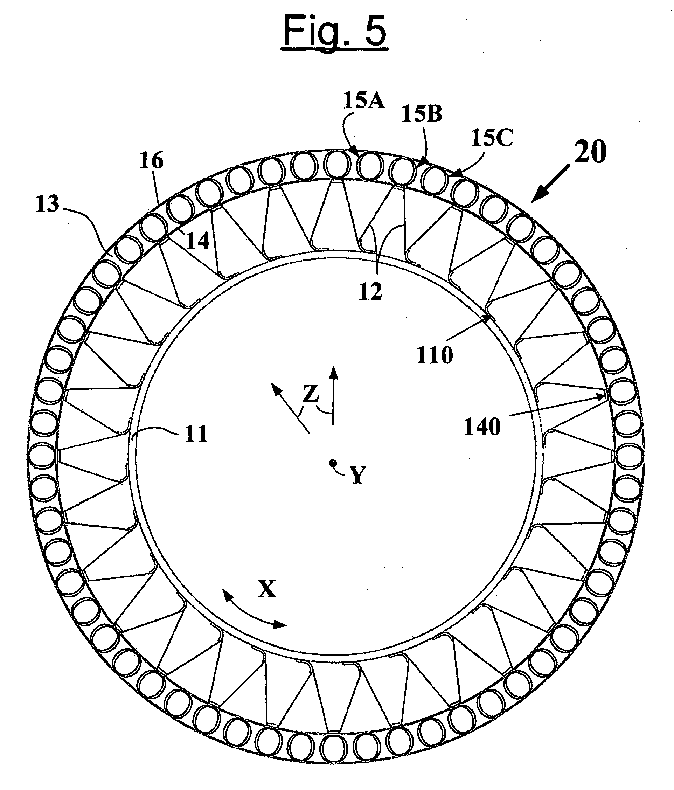

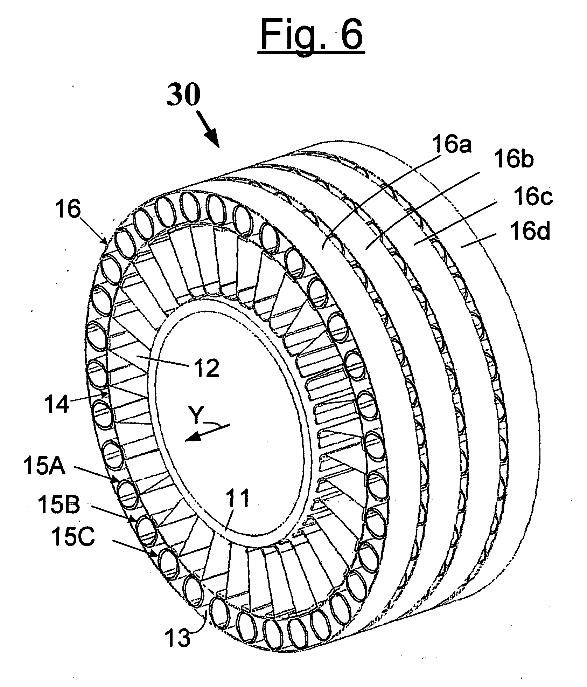

L'invention ainsi que ses avantages seront aisément compris à la lumière de la description détaillée et des exemples de réalisation qui suivent, ainsi que des figures relatives à ces exemples qui schématisent (sans respect d'une échelle spécifique) :
- en coupe transversale, un exemple de produit stratifié selon l'invention orienté selon une direction principale X qui est rectiligne (Fig. 1) ;
- en coupe transversale, un autre exemple de produit stratifié selon un autre mode de réalisation de l'invention, orienté selon une direction principale X qui suit une ligne courbe (Fig. 2) ;
- une vue en perspective de la coupe transversale de la Fig. 1 (Fig. 3) ;
- en coupe radiale, deux exemples de roue élastique non pneumatique comportant un produit stratifié selon l'invention (Fig. 4 et Fig. 5) ;
- une vue complète en perspective d'un exemple de roue élastique non pneumatique comportant un produit stratifié selon l'invention (Fig. 6).

### DEFINITIONS

Dans la présente description, sauf indication expresse différente, tous les pourcentages (%) indiqués sont des % en masse.

D'autre part, dans la présente demande, on entend par :
- "composite", en parlant d'un matériau ou objet quelconque : un matériau ou objet comportant des fibres, courtes ou continues, enrobées dans une matrice de résine ;
- "couche" ou "bande" : une feuille ou tout autre élément d'épaisseur relativement faible par rapport à ses autres dimensions, cette couche pouvant être ou non de nature homogène ou cohésive ;
- "cylindre", tout cylindre creux (i.e., sans fond) au sens le plus large du terme, c'est-à-dire tout objet de forme cylindrique de section droite (orthonormale) quelconque, c'est-à-dire dont le contour définit une ligne fermée sans point d'inflexion (cas par exemple d'une section circulaire, ovale, elliptique) ou avec point(s) d'inflexion ; selon une telle définition, on comprendra que des termes tels que tube, tube cylindrique, portion de tube cylindrique, élément tubulaire, colonne tubulaire, élément cylindrique désignent tous ledit "cylindre" ;
- "fibres unidirectionnelles", un ensemble de fibres essentiellement parallèles entre elles, c'est-à-dire orientées selon un même axe ;
- "non pneumatique", en parlant d'une roue ou d'un bandage : une roue ou un bandage conçu(e) pour être capable de porter une charge substantielle sans pression de gonflage, c'est-à-dire ne nécessitant pas un gaz de gonflage tel que l'air pour prendre sa forme utilisable et supporter la charge ;
- "orienté selon un axe ou une direction" en parlant d'un élément quelconque tel qu'une bande, une fibre ou autre élément de renforcement longiligne, un élément qui est orienté sensiblement parallèlement à cet axe ou cette direction, c'est-à-dire faisant avec cet axe ou cette direction un angle ne s'écartant pas de plus de 10 degrés (c'est-à-dire nul ou au plus égal à 10 degrés), de préférence pas de plus de 5 degrés ;
- "orienté perpendiculairement à un axe ou une direction" : en parlant d'un élément quelconque tel qu'une bande, une fibre ou autre élément de renforcement longiligne, un élément qui est orienté sensiblement perpendiculairement à cet axe ou cette direction, c'est-à-dire faisant avec une perpendiculaire à cet axe ou cette direction un angle ne s'écartant pas de plus de 10 degrés, de préférence pas de plus de 5 degrés ;
- "orienté radialement", en parlant d'un élément de roue (ou de bandage) : orienté selon une direction quelconque passant par l'axe de rotation de la roue (ou du bandage) et sensiblement perpendiculairement à cette direction, c'est-à-dire faisant avec cette direction un angle ne s'écartant pas de plus de 10 degrés, de préférence pas de plus de 5 degrés ;
- "orienté circonférentiellement", en parlant d'un élément de roue (ou de bandage) : orienté sensiblement parallèlement à la direction circonférentielle de la roue (ou du bandage), c'est-à-dire faisant avec cette direction un angle ne s'écartant pas de plus de 10 degrés, de préférence pas de plus de 5 degrés ;
- "produit stratifié", au sens de la classification internationale des brevets : tout produit comportant au moins deux couches ou bandes, de forme plane ou non plane, qui sont liées, connectées entre elles ; l'expression "lié" ou "connecté" doit être interprétée de façon extensive de manière à inclure tous les moyens de liaison ou d'assemblage, par exemple par collage, clouage, rivetage, boulonnage ;
- "résine" : toute résine synthétique, de type thermoplastique ou de type thermodurcissable (encore dite pour cette dernière durcissable, polymérisable ou réticulable), et par extension toute composition, formulation à base de ladite résine et comportant en outre un ou plusieurs additifs tels que par exemple un agent durcissant.

### DESCRIPTION DETAILLEE DE L'INVENTION

Le produit stratifié de l'invention (1) a pour caractéristique essentielle de comporter au moins (en référence aux Fig. 1, Fig. 2 et Fig. 3) :
○ une bande supérieure (2) et une bande inférieure (3) orientées toutes deux selon une même direction principale (X) ;
○ entre les deux bandes et connectant ces dernières en des zones (4) dites zones d'ancrage, une série (5A, 5B, 5C, ...) s'étendant dans la direction X, de structures cylindriques (5) dites structures cylindriques de connexion, non jointives selon la direction X.

Chaque structure cylindrique de connexion (5) a en outre pour caractéristique essentielle de comporter une pluralité de (i.e., au moins deux) cylindres élémentaires (5a, 5b) ayant leur génératrice orientée selon un axe Y perpendiculaire à la direction X (tout au moins dans la structure non déformée), lesdits cylindres élémentaires étant emboîtés les uns dans les autres et interconnectés (solidarisés) entre eux dans chaque zone d'ancrage (4a, 4b) auxdites bandes supérieure (2) et inférieure (3).

En dehors des deux zones d'ancrage (zone supérieure 4a, zone inférieure 4b) de chaque structure cylindrique de connexion, zones pouvant être également dénommées "zones d'encastrement" ou "zones de connexion", où chaque structure cylindrique de connexion vient s'ancrer, se connecter, directement ou indirectement, aux deux bandes (bande supérieure 2 et bande inférieure 3) du produit stratifié, les cylindres élémentaires (5a, 5b, ...) constitutifs de chaque structure cylindrique de connexion (5A, 5B, 5C, ...), avec ou sans jeu entre eux, travaillent indépendamment les uns des autres.

L'homme du métier à la lecture de la présente demande comprendra aisément que, au repos, les cylindres élémentaires peuvent être au contact ou non les uns des autres, mais qu'en fonctionnement normal, en dehors desdites zones d'ancrage, ces cylindres élémentaires sont préférentiellement non connectés, non solidarisés entre eux afin qu'ils puissent fonctionner de manière optimale, c'est-à-dire indépendamment l'un de l'autre (dans le cas de deux cylindres élémentaires) ou les uns des autres (dans le cas de plus de deux cylindres élémentaires).

L'emploi de plusieurs (c'est-à-dire deux ou plus de deux, par exemple trois ou quatre) cylindres élémentaires empilés, préférentiellement concentriques, plutôt que d'un seul cylindre, permet avantageusement, pour une même raideur du produit stratifié de l'invention, de limiter les contraintes dans la structure cylindrique de connexion et d'augmenter ainsi le déplacement admissible de l'ensemble.

Les cylindres élémentaires (5a, 5b) peuvent être de différentes épaisseurs de l'un à l'autre, ils ont de préférence une forme ovoïde plus ou moins marquée afin d'optimiser (augmenter) la surface de contact desdits cylindres, particulièrement celle du cylindre le plus externe (5a), sur les deux bandes (2, 3) dans les zones d'ancrage respectives (4a, 4b).

Dans le cas par exemple de deux cylindres élémentaires (5a, 5b) par structure cylindrique de connexion, comme illustré par exemple aux fig. 1 à 3, on comprendra que le diamètre (i.e., dimension selon l'axe Z) extérieur du cylindre élémentaire interne (5b) est inférieur ou au plus égal au diamètre (dimension selon Z) interne du cylindre élémentaire externe (5a) (celui le plus proche des bandes supérieure et inférieure, généralement sensiblement tangent à ces dernières).

On préfère que les différents cylindres élémentaires emboîtés les uns dans les autres aient un diamètre (dimension selon l'axe Z) aussi proche que possible d'un cylindre à l'autre , afin d'optimiser l'endurance globale de l'ensemble formant la structure cylindrique de connexion, et finalement celle du produit stratifié de l'invention.

Le produit stratifié de l'invention forme ainsi une structure creuse, très alvéolée, que l'on peut qualifier de "cellulaire" en ce sens qu'aucune autre matière n'est nécessaire entre les deux bandes et les structures cylindriques de connexion (formées de cylindres creux et sans fond, par définition).

Cette structure cellulaire déformable est utilisable comme une poutre élastique (plane ou non plane) à résistance élevée aux efforts en flexion-compression et haute endurance à de tels efforts répétés ou alternés, ceci grâce à sa capacité à générer une déformation assimilable à du cisaillement entre ses deux bandes sous l'action de diverses sollicitations en traction, flexion ou compression.

La direction principale X peut être rectiligne comme représenté à la Fig. 1 ou à la Fig. 3 (coupe en perspective correspondant à la coupe de la Fig. 1) ou bien suivre une ligne courbe comme représenté à la Fig. 2.

Dans le produit stratifié de l'invention, les deux bandes et les structures cylindriques de connexion peuvent être constitués de divers matériaux tels que des métaux (par exemple titane, acier, aluminium, alliages métalliques), des polymères ou des matériaux composites. Ce produit stratifié de l'invention peut être également de nature hybride, c'est-à-dire constitué de matériaux différents combinés.

Toutefois, selon un mode de réalisation préférentiel de l'invention, les cylindres élémentaires sont des cylindres en matériau composite c'est-à-dire comportant des fibres noyées (ou enrobées, les deux étant considérés comme synonymes) dans une matrice de résine ; plus particulièrement, ce sont à la fois les cylindres élémentaires et les deux bandes qui sont en matériau composite.

Grâce à des structures cylindriques de connexion en matériau composite, le produit stratifié de l'invention peut avoir un potentiel de déformation important dans un domaine purement élastique. De telles structures cylindriques de connexion en matériau composite sont particulièrement endurantes car elles présentent un comportement purement élastique jusqu'à la rupture, sans déformation plastique, contrairement par exemple à une structure métallique qui pourrait connaître sous très forte déformation un comportement plastique, i.e., irréversible, nuisible de manière connue à l'endurance. Cette propriété avantageuse s'applique également aux bandes (2, 3) lorsque ces dernières sont elles aussi en matériau composite fibres/ résine.

Comparativement à une structure en métal, on obtient ainsi une structure plus endurante, nettement plus légère (densité du composite proche de 2) et résistant en outre à la corrosion.

Les fibres des cylindres élémentaires (5a, 5b) peuvent être des fibres continues ou des fibres courtes ; on préfère utiliser des fibres continues. Pour une meilleure résistance des cylindres, ces fibres sont plus préférentiellement unidirectionnelles et orientées circonférentiellement dans un plan perpendiculaire à l'axe Y.

Les cylindres élémentaires travaillent essentiellement en flexion. Selon l'axe circonférentiel de leurs fibres de renforcement, ils présentent un module en extension (ASTM D 638) et en flexion (ASTM D 790) qui sont de préférence supérieurs à 15 GPa, plus préférentiellement supérieurs à 30 GPa, notamment compris entre 30 et 50 GPa.

L'invention s'applique aux cas où les deux bandes (2, 3) pourraient être constituées d'un matériau, par exemple en métal ou en polymère, autre que celui, composite ou non, des cylindres élémentaires.

Selon un mode de réalisation préférentiel, les bandes supérieure (2) et inférieure (3) (appelées parfois "membranes" par l'homme du métier, ou plutôt "semelles" dans le domaine des stratifiés composites) sont des bandes composites qui comportent également des fibres noyées dans une matrice de résine. Ainsi, l'ensemble de la structure de base, constitué par les deux bandes (2, 3), la série (5A, 5B, 5C) de structures cylindriques de connexion et leur pluralité de cylindres de connexion (5a, 5b), est en matériau composite. De préférence, ces fibres des bandes (2, 3) sont des fibres continues ; plus préférentiellement, ces fibres continues sont unidirectionnelles, orientées parallèlement à la direction principale X afin que les bandes aient un maximum de résistance en traction dans la direction principale X. Dans cette direction X, les deux bandes (2, 3) présentent un module en extension (ASTM D 638) qui est de préférence supérieur à 15 GPa, plus préférentiellement supérieur à 30 GPa (par exemple entre 30 et 50 GPa).

Les cylindres élémentaires (5a, 5b) et/ou les bandes composites (2, 3) ci-dessus, lorsqu'elles sont préférentiellement en matériau composite, peuvent être constitués d'une seule couche filamenteuse ou de plusieurs couches filamenteuses élémentaires superposées dont les fibres sont préférentiellement toutes orientées selon la direction principale X. Dans cette structure multicouches peuvent être intercalées une ou plusieurs autres couches additionnelles de fils croisés, notamment orientés selon l'axe Y (génératrice des cylindres), ceci afin de renforcer la structure latéralement et ainsi, selon un terme consacré dans le métier des composites, équilibrer la structure d'ensemble.

Selon un autre mode de réalisation préférentiel, les structures cylindriques de connexion (5) ont, d'une structure cylindrique à l'autre, un diamètre D (diamètre externe ou dimension selon l'axe Z, tel que représenté aux figures 1, 2 et 3) qui est sensiblement constant selon une direction Z dite radiale, normale à la direction X et à l'axe Y, de manière à pouvoir maintenir les bandes supérieure (2) et inférieure (3) sensiblement équidistantes.

Selon un autre mode de réalisation possible de l'invention, les structures cylindriques de connexion (5) peuvent également avoir, d'une structure cylindrique à l'autre, un diamètre (ou dimension selon direction Z) D qui est linéairement variable dans la direction principale X, lorsqu'on souhaite au contraire une structure dans laquelle la distance entre les deux bandes est susceptible de varier progressivement selon l'axe principal X.

Comme déjà indiqué, la définition des cylindres élémentaires n'étant pas limitée à des cylindres de section droite circulaire, le terme "diamètre" doit être considéré dans la présente demande, de manière extensive, comme la dimension du cylindre (épaisseur comprise) dans la direction radiale Z.

L'homme du métier saura, en fonction des applications particulières visées, ajuster les dimensions particulières des structures cylindriques de connexion, de leurs cylindres élémentaires et des bandes, leur arrangement relatif, aux dimensions du produit fini destiné à incorporer le produit stratifié de l'invention. La dimension D par exemple permet d'ajuster la raideur en flexion des structures cylindriques de connexion.

Une caractéristique essentielle du produit stratifié (1) de l'invention est que ses structures cylindriques de connexion (5A, 5B, 5C) sont non jointives dans la direction principale X afin qu'elles puissent se déformer et travailler en flexion.

De préférence, le rapport d/D est compris entre 0,10 et 0,50, d représentant la distance moyenne d, mesurée selon la direction X, entre deux structures cylindriques de connexion consécutives, tel qu'illustré aux Fig. 1, 2 et 3. Par distance moyenne, on entend une moyenne calculée sur l'ensemble des structures cylindriques de connexion (5) présentes dans le produit stratifié (1). Si d/D est inférieur à 0,10, on risque s'exposer à un certain manque de souplesse en cisaillement alors que si d/D est supérieur à 0,50, un manque d'uniformité de la déformation de flexion peut apparaître. Pour ces raisons, le rapport d/D est plus préférentiellement compris dans un domaine d'environ 0,15 à 0,40.

On notera à ce titre que, sur la figure 4 schématique qui sera commentée plus tard, les structures cylindriques de connexion (15A, 15B, 15C, etc.) ainsi que les rayons de roue (12) ont été représentés en nombre relativement réduit par rapport aux modes de réalisation préférentiels de l'invention, ceci dans un simple but de simplification de la figure.

A titre d'exemples préférentiels de structures de produit stratifié (1) selon l'invention, notamment lorsque la direction principale X de ce dernier n'est pas rectiligne mais courbe ou circonférentielle (Fig. 2), on a au moins une quelconque, plus préférentiellement encore l'ensemble des caractéristiques suivantes qui est vérifié(e) :
- un diamètre D qui est compris entre 10 et 100 mm ;
- une distance moyenne d qui est comprise entre 1 et 50 mm ;
- une largeur L_{b} des bandes et une largeur L_{c} des structures cylindriques de connexion, mesurées toutes deux dans une direction parallèle à l'axe Y, qui sont chacune comprises entre 5 et 200 mm ;
- une épaisseur E_{b} des bandes (épaisseur mesurée selon la direction radiale Z) qui est comprise entre 0,25 et 3 mm.
- une épaisseur E_{c} des cylindres élémentaires (épaisseur mesurée par exemple selon la direction radiale Z) qui est comprise entre 0,10 et 3 mm.

Ces caractéristiques préférentielles correspondent particulièrement au cas où le produit stratifié de l'invention est utilisé comme bande de cisaillement dans une roue non pneumatique de dimension usuelle, comme cela sera développé plus en détail plus loin.

Plus préférentiellement, pour les raisons indiquées ci-dessus, on a au moins une quelconque, plus préférentiellement encore l'ensemble des caractéristiques suivantes qui est vérifié(e) :
- un diamètre D qui est compris entre 15 et 45 mm ;
- une distance moyenne d qui est comprise entre 1,5 et 40 mm (notamment entre 3 et 40 mm, plus particulièrement entre 5 et 15 mm) ;
- une largeur L_{b} des bandes et largeur L_{c} des structures cylindriques de connexion qui sont chacune comprises entre 20 et 100 mm ;
- une épaisseur E_{b} des bandes qui est comprise entre 0,5 et 2 mm ;
- une épaisseur E_{c} des cylindres élémentaires qui est comprise entre 0,2 et 2 mm.

Bien entendu, des valeurs D inférieures à 10 mm ou supérieures à 100 mm restent possibles en fonction des rayons de courbure ou des diamètres de roues envisagés.

Ainsi, à titre d'autres exemples préférentiels possibles de structures de produit stratifié selon l'invention, on a au moins une quelconque, plus préférentiellement encore l'ensemble des caractéristiques suivantes qui est vérifié(e) :
- un diamètre D qui est compris entre 10 et 100 cm, notamment entre 15 et 45 cm ;
- une distance moyenne d qui est comprise entre 1 et 50 cm, notamment entre 1,5 et 40 cm ;
- une largeur L_{b} des bandes et une largeur L_{c} des structures cylindriques de connexion, mesurées toutes deux dans une direction parallèle à l'axe Y, qui sont chacune comprises entre 5 et 200 cm, notamment entre 20 et 100 cm ;
- une épaisseur E_{b} des bandes qui est comprise entre 0,25 et 3 cm, notamment entre 0,5 et 2 cm.
- une épaisseur E_{c} des cylindres élémentaires qui est comprise entre 0,10 et 3 cm, notamment entre 0,20 et 2 cm.

Les différentes pièces constitutives du produit stratifié (1) composite de l'invention, en particulier les structures cylindriques de connexion (5) et les bandes supérieure (2) et inférieure (3) qui en constituent les pièces de base, peuvent être connectés directement grâce à des moyens de fixation chimiques, physiques ou mécaniques. A titre d'exemples de tels moyens de fixation directs, on citera par exemple des adhésifs, des rivets, boulons, agrafes, des ligatures ou coutures diverses. Les moyens de fixation peuvent être en matériaux divers, tels que métal, alliage métallique, matière plastique ou encore en matériau composite (par exemple à base de fibres de verre ou de carbone).

Pour un meilleur ancrage, les structures cylindriques de connexion (5) peuvent aussi pénétrer partiellement dans les bandes supérieure (2) et/ou inférieure (3) auxquelles elles sont connectées.

Selon un autre mode de réalisation possible, les structures cylindriques de connexion (5) peuvent être connectées indirectement aux bandes supérieure (2) et inférieure (3), c'est-à-dire au moyen de pièces d'assemblage intermédiaires. Ces pièces intermédiaires ou "inserts" peuvent prendre différentes formes géométriques, par exemple en forme de parallélépipède, de queue d'aronde, en forme de "1", de "T", de "U" ; elles peuvent être elles-mêmes fixées aux pièces de base (bandes et cylindres élémentaires) par des moyens de fixation tels que décrits ci-dessus. On peut utiliser notamment de tels "inserts" ou pièces de renfort chaque fois que les efforts supportés sont trop importants, ces inserts pouvant abaisser jusqu'à des taux admissibles les contraintes transmises à la structure composite. Ces inserts sont par exemple en métal, alliage métallique, en matière plastique ou encore en matériau composite (par exemple en fibres de verre ou carbone noyées dans une résine).

Pour éviter, lors de sollicitations dynamiques et répétées, un éventuel risque de frottement ou abrasion, voire de pénétration de corps étrangers entre les cylindres élémentaires adjacents, on peut si besoin intercaler entre ces cylindres élémentaires une couche protectrice et non adhésive (vis-à-vis de ces cylindres) d'un matériau, de préférence à très faible coefficient de frottement afin de ne pas s'opposer au déplacement relatif desdits cylindres élémentaires adjacents et aux propriétés thermiques adaptées, par exemple une couche de polymère (e.g. un polymère fluoré tel que PTFE).

Selon un mode de réalisation particulier, comme représenté par exemple à la figure 3 pour une seule (5C) des structures cylindriques de connexion (pour simplifier le schéma), les structures cylindriques de connexion précédemment décrites pourraient être également renforcées, pour au moins une partie d'entre elles, par au moins un élément de renforcement longiligne (6) dit "renfort radial" (notamment sous forme d'un monofilament ou d'un ruban, par exemple en matériau composite verre-résine) les traversant totalement selon leur diamètre, de manière à s'ancrer dans les bandes supérieure (2) et inférieure (3), parallèlement à une direction Z radiale qui est perpendiculaire à la direction principale X et à la génératrice Y des cylindres élémentaires. Les renfort radiaux (6) travaillent alors comme une poutre qui peut prévenir la déformation des structures cylindriques de connexion (5) perpendiculairement à leur axe Y (génératrice). Par leur raideur en traction et en compression, ils peuvent éviter au produit stratifié (1) de flamber lorsque la structure composite est soumise aux flexions les plus sévères.

Dans toute la présente description, sauf précision particulière, le terme "fibre" s'applique à tout type de fibre de renforcement, utilisable dès lors que cette dernière est compatible avec sa matrice de résine. Une telle fibre est par exemple choisie dans le groupe constitué par les fibres d'alcool polyvinylique, de polyamide aromatique (ou "aramide"), polyamide-imide, polyimide, les fibres polyester, polyester aromatique, polyéthylène, polypropylène, les fibres de cellulose, rayonne, viscose, polyphénylène benzobisoxazole (ou "PBO"), polyéthylène naphténate ("PEN"), les fibres de verre, de carbone, de silice, les fibres céramiques, et les mélanges de telle fibres.

On préfère utiliser, notamment pour une application à très basse température, des fibres choisies dans le groupe constitué par les fibres de verre, les fibres de carbone et les mélanges de telles fibres. Plus préférentiellement encore, on utilise des fibres de verre.

La résine employée est préférentiellement une résine de type thermodurcissable. Il s'agit par exemple d'une résine réticulable par un rayonnement ionisant, tel que par exemple un rayonnement ultraviolet - visible émettant de préférence dans le spectre allant au moins de 300 nm à 450 nm, un faisceau d'électrons accélérés ou de rayons X. On peut choisir aussi une composition comprenant une résine réticulable par un peroxyde, la réticulation ultérieure pouvant alors être effectuée, le moment venu, au moyen d'un apport de calories, par exemple par l'action de micro-ondes. De préférence, on utilise une composition du type durcissable par un rayonnement ionisant, la polymérisation finale pouvant être déclenchée et contrôlée aisément au moyen d'un traitement ionisant, par exemple de type UV ou UV-visible.

La résine utilisée, à l'état thermodurci, présente un module en extension (ASTM D 638) qui est préférentiellement au moins égal à 2,3 GPa, plus préférentiellement supérieur à 2,5 GPa, notamment supérieur à 3,0 GPa. Sa température de transition vitreuse (Tg), mesurée par DSC, est préférentiellement supérieure à 130°C, plus préférentiellement supérieure à 140°C.

A titre de résine réticulable, on utilise plus préférentiellement une résine polyester (i.e., à base de polyester insaturé) ou une résine vinylester. Plus préférentiellement encore, on utilise une résine vinylester.

On a constaté, de manière surprenante, qu'une résine vinylester résistait mieux que les autres à des températures extrêmement basses. Un test simple permet de mesurer que la résistance à la flexion d'un composite fibres de verre/ résine vinylester est sensiblement augmentée à très basse température. Ce test consiste à faire une boucle avec un monofilament composite (par exemple, de diamètre 1 mm) et de diminuer le rayon de courbure jusqu'à rupture (bien visible à l'oeil nu) de la partie extérieure du monofilament qui est en extension. On s'aperçoit alors, de manière inattendue, que le rayon minimum atteint devient plus petit lorsque la boucle de monofilament a été plongée juste avant dans l'azote liquide (- 196°C). Au test d'immersion ou trempe thermique dans l'azote liquide, on pourra également tester la résine en tant que telle, en privilégiant les résines qui ne fissurent pas lors d'un tel test.

Selon un mode de réalisation particulièrement préférentiel, les cylindres élémentaires des cylindres de connexion et les bandes supérieure et inférieure sont entièrement constitués de fibres de verre et/ou de fibres de carbone noyées dans une matrice de résine vinylester.

Les résines vinylester sont bien connues dans le domaine des matériaux composites. Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique, telle que décrite par exemple dans les demandes EP 1 074 369 et EP 1 174 250 (ou brevet US 6 926 853). Une résine époxyvinylester de type novolaque et bisphénolique a montré d'excellents résultats ; à titre d'exemples, on peut citer notamment les résines vinylester "ATLAC 590" ou "ATLAC E-Nova FW 2045" de la société DSM (diluées toutes deux avec du styrène). De telles résines époxyvinylester sont disponibles chez d'autres fabricants tels que Reichhold, Cray Valley, UCB.

Le produit stratifié de l'invention peut être avantageusement constitué uniquement de pièces composites, en particulier en fibres de verre noyées dans une résine vinylester.

Pour la fabrication des différents éléments constitutifs du produit stratifié de l'invention, qu'il s'agisse des cylindres élémentaires comme le cas échéant des bandes (inférieure et supérieure), on peut mettre en oeuvre tout procédé approprié pour la fabrication de blocs, nappes ou encore éléments longilignes tels que des monofilaments ou rubans.

De tels procédés sont largement connus aujourd'hui par l'homme du métier des matériaux composites.

La demande de brevet EP 1 174 250 (ou brevet US 6 926 853) a proposé par exemple, après dégazage, d'imprégner un arrangement rectiligne de fibres par de la résine liquide, de faire passer l'imprégné liquide au travers d'une filière calibrée pour imposer par exemple une forme de monofilament de section ronde ou celle d'un ruban, de stabiliser le monofilament ou ruban en aval de la filière par une solidification substantielle de la résine dans une chambre UV de stabilisation, puis d'enrouler le monofilament ou ruban solide (stabilisé) sur un support de forme appropriée, enfin faire cuire le tout dans un moule sous pression afin de solidariser l'ensemble et garantir une résistance élevée au cisaillement.

La demande de brevet WO 2007/085414 a proposé comme alternative d'enrouler directement en continu et en plusieurs couches, sur un support dictant la forme finale du bloc composite, les fibres noyées dans leur résine à l'état liquide pendant tout l'opération de fabrication, pour formation directe d'un anneau continu sur ledit support. Une fois l'anneau composite "liquide" ainsi formé, on soumet la résine liquide à une polymérisation au moins partielle, par exemple à l'aide d'UV ou d'un traitement thermique, pour stabiliser, solidifier au moins en partie ledit anneau avant de le séparer de son support. Le bloc composite ainsi stabilisé, dans lequel la composition de résine est alors, au moins pour partie, en phase solide, peut alors être aisément manipulé, stocké tel quel ou traité immédiatement afin de finir de polymériser la résine (cuisson ou réticulation finale). Ainsi, l'opération de cuisson finale peut être réalisée sous simple pression atmosphérique, "hors moule" (ou "moule ouvert" selon une terminologie reconnue).

Le produit stratifié de l'invention précédemment décrit peut constituer un stade intermédiaire de la fabrication d'un objet ou produit fini qui est ou n'est pas stratifié sous sa forme finale.

Sa structure, équivalente à une structure du type nid d'abeilles, lui ouvre un éventail très large d'applications possibles, qui couvre par exemple la mécanique générale, les sports et loisirs, le bâtiment et travaux publics, le transport filaire, routier ou ferroviaire, aérien ou spatial, l'automobile.

Selon un mode de réalisation préférentiel, ce produit stratifié est un produit stratifié composite constitué de matériaux élastiques conservant leurs propriétés dans une très large gamme de températures ; de manière inattendue, il s'est révélé capable d'imiter, dans cette très large gamme de températures, la déformation en cisaillement d'un élastomère d'une bande de cisaillement telle que décrite dans l'art antérieur.

Ainsi, ce produit stratifié composite de l'invention est notamment utilisable dans des bandages ou roues non pneumatiques de tous types de véhicules automobiles, terrestres ou non terrestres, en particulier de véhicules destinés à affronter des conditions de roulage sévères ou agressives, ou des températures extrêmes telles que celles que pourraient rencontrer par exemple des véhicules lunaires, des engins de transport routier, des véhicules hors-la-route tels qu'engins agricoles ou de génie civil, ou tout autre type de véhicules de transport ou de manutention pour lequel l'utilisation d'un matériau élastomérique n'est pas possible ou n'est pas souhaitée.

A titre d'exemple, la figure 4 représente de manière très schématique une coupe radiale (i.e., dans un plan perpendiculaire à l'axe de rotation Y de la roue) d'une roue élastique non pneumatique (10), supportée structurellement (i.e., grâce à une structure porteuse), dont la bande de cisaillement (13) circonférentielle est constituée par un produit stratifié conforme à l'invention.

Cette roue non pneumatique (10), définissant trois directions perpendiculaires, circonférentielle (X), axiale (Y) et radiale (Z), comporte au moins :
- un moyeu (11) ;
- une bande annulaire dite de cisaillement (13) comprenant au moins une membrane circonférentielle interne (14) et une membrane circonférentielle externe (16) orientées selon la direction circonférentielle X ;
- une pluralité d'éléments de support (12) connectant le moyeu (11) à la membrane circonférentielle interne (14).

En outre, elle présente les caractéristiques suivantes :
- les deux membranes (14, 16) sont connectées entre elles, dans des zones d'ancrage (17a, 17b), par l'intermédiaire d'une série s'étendant dans la direction circonférentielle (X) de structures cylindriques de connexion (15A, 15B, 15C, etc.), lesdits structures cylindriques de connexion (15) étant non jointives selon la direction circonférentielle X ;
- chaque structure cylindrique de connexion comporte une pluralité (deux dans l'exemple de la Fig. 4) de cylindres élémentaires concentriques (15a, 15b) ayant leur génératrice orientée selon un axe Y perpendiculaire à la direction X, lesdits cylindres élémentaires étant emboîtés les uns dans les autres et interconnectés entre eux dans chaque zone d'ancrage.

En d'autres termes, l'axe (génératrice) des structures cylindriques de connexion, et donc des cylindres élémentaires eux-mêmes, est aligné parallèlement à l'axe de rotation de la roue, tout au moins dans la structure de la roue au repos (non déformée).

Sur cette figure 4, on voit que chaque structure cylindrique de connexion (15A, 15B, 15C, etc) est constituée en fait de deux cylindres élémentaires (15a, 15b) plus ou moins ovoïdes et emboîtés l'un dans l'autre. Ces deux cylindres élémentaires (15a, 15b) sont tous deux connectés, dans des zones dites d'ancrage (17a, 17b), aux membranes circonférentielles interne (14) et externe (16), soit par des moyens de fixation directs (par exemple, colle, rivets ou boulons), soit au moyen de pièces d'assemblage intermédiaires ; à l'extérieur des deux zones d'ancrage, ces deux cylindres élémentaires (15a, 15b) ne sont plus connectés entre eux afin de pouvoir fonctionner indépendamment l'un de l'autre.

Ces pièces d'assemblage intermédiaires, non représentées sur cette figure 4 dans un souci de simplification, peuvent consister en des barrettes plates (inserts en forme de "I") orientées parallèlement à la génératrice des cylindres élémentaires, disposées (par exemple collées ou rivetées) à l'intérieur du cylindre élémentaire le plus interne (une barrette du côté de la zone d'ancrage 17a, une autre barrette du côté de la zone d'ancrage 17b).

Sur cette figure 4, conformément à un mode de réalisation particulièrement préférentiel, chaque cylindre élémentaire constitutif d'une structure cylindrique de connexion (15A, 15B, 15C, etc.) est formé de fibres noyées dans une matrice de résine.

Dans cet exemple de roue (10), chaque membrane circonférentielle (14, 16), d'épaisseur égale à environ 1 mm, est constituée par exemple de deux fois trois couches de fibres continues de verre ("Advantex" de la société Owens Corning ; titre 1200 tex), dégazées et imprégnées par une résine vinylester ("Atlac 590" de la société DSM + photo-initiateur "Irgacure 819" de la société Ciba) entre lesquelles on a ajouté un tissu tramé en fibre de verre (verre "E" ; grammage 125 g/m²), imprégné par une résine vinylester, pour équilibrage de l'ensemble composite. La membrane a été obtenue par enroulement filamentaire (ruban issu d'une buse de 0,2 x 5 mm) à un angle voisin de zéro degré. Après enroulement (pas de pose de 5 mm) de trois couches élémentaires, on a stoppé l'enroulement puis déposé sur la troisième couche le tissu tramé imprégné de résine, avant d'enrouler les trois dernières couches de ruban pardessus le tissu tramé ainsi intercalé. Puis on a polymérisé l'ensemble sous UV, sur le support d'enroulement. Selon un autre mode de fabrication, on peut par exemple enrouler en continu comme suit : on dépose successivement une couche à 0°, puis une couche à -5°, une couche à +5°, une couche à 0°, une couche à +5° ; une couche à -5° ; et on termine par une couche à 0°, le tout en continu. Les couches à +5° et -5° donnent suffisamment de cohésion latérale ; l'épaisseur finale est toujours la même. Ainsi préparée, chaque membrane a par exemple, dans la direction de ses fibres de renforcement, un module en traction de l'ordre de 45 GPa.

Les cylindres élémentaires (15a, 15b), de diamètres respectivement égaux à environ 29 et 30 mm et d'épaisseur voisine de 0,4 mm, ont été préparés comme les membranes ci-dessus, par enroulement filamentaire en deux couches, perpendiculairement à l'axe (génératrice) du cylindre. Après quoi on a polymérisé l'ensemble sous UV (sur le support d'enroulement). Les structures cylindriques de connexion ont un diamètre D constant dans la direction radiale, de manière à maintenir les membranes circonférentielles externe (16) et interne (14) sensiblement équidistantes. Dans la bande de cisaillement (13), la distance moyenne d, mesurée selon la direction circonférentielle X, entre deux structures cylindriques de connexion (15) consécutives est par exemple d'environ 7 mm.

Les éléments de support (12) ou "rayons de roue", à faible rigidité de compression, travaillent en tension pour transmettre les efforts entre la bande de cisaillement annulaire (13) et le moyeu (11) de la roue, comme décrit par exemple dans le brevet US 7 201 194 précité (voir par exemple fig. 7 à fig. 11). Leur épaisseur est fine relativement à celle des membranes, préférentiellement inférieure à 0,5 mm, plus préférentiellement encore inférieure à 0,3 mm.

Grâce à leur présence, on favorise une pression de contact au sol uniformément répartie, d'où un meilleur travail de la roue ; on évite ainsi des points localisés de haute pression et les risques d'enlisement ou d'ensablement qui peuvent aller avec sur des sols instables.

Ces rayons de roue (12) peuvent être en matériaux aussi divers que métal (ou alliages métalliques), polymères ou encore matériaux hybrides, renforcés ou non. A titre d'exemples, on peut citer des polymères tels que des polyuréthanes, des matériaux composites comportant des fibres, notamment de verre et/ou de carbone, imprégnées ou non par une résine. Le module en extension des matériaux utilisés est adapté bien entendu à la charge qui sera supportée par chaque rayon de roue. En réglant la capacité d'allongement élastique des rayons de roue (ou celle des matériaux les constituant), on peut générer une contre-flèche plus ou moins importante et ainsi ajuster l'empreinte au sol de la roue. Ainsi, préférentiellement, on utilise des rayons de roue présentant un allongement élastique sous traction de quelques %, typiquement de 1 à 5%.

Selon un mode de réalisation préférentiel, notamment pour une utilisation de la roue à très basse température, on peut utiliser des rayons de roue qui sont eux-mêmes en matériau composite, comme par exemple un tissu de fibres de verre imprégné PTFE(polytétrafluoroéthylène), des couches de fibres de verre continues, unidirectionnelles, noyées dans une matrice de résine vinylester, ou encore un tissu de fibres polyester.

On voit sur cette figure 4 que, conformément à un mode de réalisation préférentiel, il existe un rayon de roue (12) au regard de chaque structure cylindrique de connexion (15), chaque rayon de roue (12) pouvant être aligné ou pas, dans une direction radiale Z, avec ladite structure cylindrique (15). Les rayons de roue (12) pourraient entre également agencés dans une direction autre que radiale, par exemple disposés en zig-zag autour du moyeu 11, comme illustré par exemple à la figure 5 commentée ultérieurement.

Pour tous les éléments composites de la roue ci-dessus décrite, le contenu en fibres est par exemple d'environ 70% (soit environ 30% en poids de résine).

Pour la fabrication de la roue (10) illustrée par exemple aux figures 4 ou 5, on peut utiliser tout procédé d'assemblage approprié des éléments décrits ci-dessus, par exemple en adoptant les étapes consécutives suivantes:
- fabrication des deux membranes (14, 16) ;
- positionnement sur un gabarit de montage des structures cylindriques de connexion (15A, 15B, 15C, etc.) après emboîtement initial, deux par deux, des cylindres élémentaires (15a, 15b) ;
- positionnement de barrettes (inserts plats en forme de "I") à l'intérieur de chaque structure cylindrique de connexion (i.e., à l'intérieur du cylindre élémentaire le plus interne) et dans chaque zone d'ancrage (17a, 17b), lesdites barrettes étant orientées selon la génératrice dudit cylindre ;
- fixation par collage (par exemple à l'aide d'une colle époxy) des deux membranes (14, 16), des cylindres élémentaires (15a, 15b) et des barrettes (inserts) ;
- positionnement et collage des rayons de roue (12) ;
- par exemple, les rayons sont ajustés à la bonne longueur et collés à leurs deux extrémités sur des barrettes (inserts) en composite adaptées l'une à la membrane interne (14) l'autre au moyeu métallique ; la barrette côté membrane (14) est à la fois collée et rivetée (ou boulonnée), alors que celle côté moyeu n'est que rivetée (ou boulonnée) ;
- perçage simultané en au moins deux points de la bande de cisaillement (membranes, cylindres élémentaires et barrettes) ;
- rivetage (ou boulonnage) de la bande de cisaillement (à travers membranes, cylindres et barrettes) au moyen de rivets (ou boulons) métalliques (par exemple en acier inox), à travers les trous de perçage ci-dessus.

De préférence, pour une bonne efficacité de pression de contact au sol, la roue de l'invention vérifie la relation 0,7 ≤ Di/De < 1, plus préférentiellement la relation 0,8 ≤ Di/De < 1, Di étant le diamètre de la membrane circonférentielle interne (14) et De étant le diamètre de la membrane circonférentielle externe (16). A titre d'exemple Di et De sont compris dans un domaine d'environ 200 mm à 2000 mm.

Comme décrit précédemment, les structures cylindriques de connexion (15) peuvent être connectées directement aux membranes (14, 16) grâce à des moyens de fixation appropriés déjà décrits, ou bien connectées indirectement au moyen de pièces d'assemblage intermédiaires, notamment grâce à des inserts en métal, en matière plastique ou en matériau composite, ayant également pour fonction de renforcer les points d'assemblage.

La figure 5 illustre un autre exemple de roue (20) dans laquelle les rayons de roue (12), d'épaisseur très fine (environ 0,15 mm), orientés cette fois non pas radialement (parallèlement à la direction radiale Z) mais obliquement, sont assemblés en forme de ziz-zag au moyen de tels inserts (110, 140), d'une part au moyeu (11) de roue, d'autre part à la membrane circonférentielle interne (14). Les inserts (110) assemblant les rayons de roue (12) sur le moyeu rigide (11) sont par exemple en forme de "I" ou de demis "U", constitués d'un matériau composite (fibres-résine), par exemple en fibres de verre/ résine vinylester, d'épaisseur égale à environ 1 mm. Ils ont par exemple été fabriqués comme précédemment indiqué pour les cylindres élémentaires, par enroulement filamentaire en 5 couches successives, sur un support ayant la forme d'un cylindre aplati. Après polymérisation aux UV, les demis U ont été obtenus par découpe du cylindre aplati. Les inserts (140) assemblant les rayons de roue (12) sur la membrane circonférentielle interne (14) sont par exemple de même épaisseur mais de taille plus réduite, par exemple en forme de "I" ou de demis "U", eux-mêmes en matériau composite tel que fibres de verre/ résine vinylester ; ils ont été fabriqués comme précédemment indiqué pour les autres inserts (110). Par leur capacité de flexion, des inserts (110, 140) par exemple en forme de demis "U" peuvent contribuer avantageusement à l'allongement nécessaire des rayons de roue (12) au cours du fonctionnement de la roue élastique de l'invention, notamment lorsque ces derniers peuvent présenter une élasticité insuffisante.

Enfin, la figure 6 montre une vue en perspective d'un autre exemple de roue non pneumatique (30) dont la bande de cisaillement (13) comporte en quelque sorte plusieurs bandes de cisaillement élémentaires, disposées dans des plans radiaux (i.e., perpendiculaires à la direction axiale Y) parallèles, chacune d'entre elles étant constituée par un produit stratifié conforme à l'invention. On voit sur cette figure 6 que chaque membrane circonférentielle externe élémentaire (16a, 16b, 16c, 16d) est relativement étroite (largeur axiale égale par exemple à 40 mm, mesurée selon Y) par rapport à la largeur axiale totale de la roue (par exemple égale à 200 mm). La membrane circonférentielle interne (14), peu visible sur cette vue, peut être elle-même constituée d'une seule ou de plusieurs membranes circonférentielles internes élémentaires, par exemple au nombre de deux (par exemple chacune de largeur axiale égale à 80 mm) ou de quatre (par exemple chacune de largeur axiale égale à 40 mm).

Les bandes de cisaillement élémentaires sont ici disposées circonférentiellement l'une par rapport à l'autre de telle manière que leurs structures cylindriques de connexion (15A, 15B, 15C, etc.) (largeur axiale égale à 40 mm) soient sensiblement alignés d'une bande de cisaillement élémentaire à l'autre, dans la direction axiale Y. Une telle configuration confère à la roue une plus grande flexibilité axiale et peut fournir un découplage avantageux pour "absorber" plus efficacement un obstacle lors du roulage. Toutefois, selon un autre mode de réalisation possible, les bandes de cisaillement élémentaires pourraient être disposées de telle manière que leurs structures cylindriques de connexion (15A, 15B, 15C, etc.) soient disposées en quinconce dans la direction axiale Y, d'une bande de cisaillement élémentaire à l'autre.

Une bande de roulement, non représentée pour simplification sur les figures 4 à 6, pourrait être éventuellement ajoutée aux roues précédemment décrites, disposée radialement au dessus de la membrane circonférentielle externe (16) lorsque cette dernière n'est pas destinée à un contact direct avec le sol lors du roulage de la roue non pneumatique. Cette bande de roulement peut être constituée de matériaux aussi divers que métal (ou alliages métalliques), polymères ou encore matériaux hybrides métal-polymère. A titre d'exemples de polymères, on peut citer par exemple des polyesters tels que PET, du PTFE, de la cellulose telle que de la rayonne, des caoutchoucs tels que des caoutchoucs diéniques ou des polyuréthanes. Pour une utilisation à très basse température, on préfère une bande de roulement en métal, ou en polymère autre que caoutchouc.

Selon un mode de réalisation préférentiel, la bande de roulement se présente sous la forme d'un tissu tridimensionnel, notamment dans les matériaux précités, dont l'épaisseur est par exemple comprise entre 5 et 20 mm. Selon un autre mode de réalisation préférentiel, le cuir utilisé comme bande de roulement, notamment selon une épaisseur de quelques mm (par exemple 3 à 4 mm), s'est révélé de manière surprenante particulièrement performant à très basse température. Cette bande de roulement peut être fixée à la bande de cisaillement de la roue par divers moyens de fixation tels que décrits supra, par exemple par collage ou boulonnage, voire à l'aide de moyens d'assemblage tels que les inserts précédemment décrits. Selon un autre mode de réalisation possible, elle pourrait être incorporée directement à la membrane circonférentielle externe (16) pendant sa fabrication.

## Revendications

1. Produit stratifié (1) formant une structure cellulaire déformable, **caractérisé en ce qu'**il comporte au moins :
○ une bande supérieure (2) et une bande inférieure (3) orientées toutes deux selon une même direction principale (X) ;
○ entre les deux bandes et connectant ces dernières en des zones (4) dites zones d'ancrage, une série (5A, 5B, 5C) s'étendant dans la direction X, de structures cylindriques (5) dites structures cylindriques de connexion non jointives selon la direction X,
et **en ce que** chaque structure cylindrique de connexion (5) comporte une pluralité de cylindres élémentaires (5a, 5b) ayant leur génératrice orientée selon un axe Y perpendiculaire à la direction X, lesdits cylindres élémentaires étant emboîtés les uns dans les autres et interconnectés entre eux dans chaque zone d'ancrage (4).

2. Produit stratifié selon la revendication 1, dans lequel les cylindres élémentaires sont des cylindres concentriques.

3. Produit stratifié selon la revendication 1 ou 2, dans lequel les cylindres élémentaires sont des cylindres composites comportant des fibres noyées dans une matrice de résine.

4. Produit stratifié selon la revendication 3, dans lequel les fibres sont continues et unidirectionnelles, orientées circonférentiellement dans un plan perpendiculaire à l'axe Y.

5. Produit stratifié selon l'une quelconque des revendications 1 à 4, dans lequel les fibres des cylindres élémentaires sont des fibres de verre et/ou des fibres de carbone.

6. Produit stratifié selon l'une quelconque des revendications 1 à 5, dans lequel les bandes supérieure et inférieure comportent des fibres noyées dans une matrice de résine.

7. Produit stratifié selon la revendication 6, dans lequel les fibres des bandes sont des fibres continues.

8. Produit stratifié selon la revendication 7, dans lequel les fibres continues des bandes sont unidirectionnelles, orientées parallèlement à la direction X.

9. Produit stratifié selon l'une quelconque des revendications 6 à 8, dans lequel les fibres des bandes sont des fibres de verre et/ou des fibres de carbone.

10. Produit stratifié selon l'une quelconque des revendications 1 à 9, dans lequel les structures cylindriques de connexion ont un diamètre D externe sensiblement constant selon une direction Z normale à la direction X et à l'axe Y, de manière à maintenir les bandes supérieure et inférieure sensiblement équidistantes.

11. Produit stratifié selon l'une quelconque des revendications 1 à 10, dans lequel la distance moyenne d, mesurée selon la direction X, entre deux structures cylindriques de connexion consécutives est telle que le rapport d/D est compris entre 0,10 et 0,50.

12. Produit stratifié selon l'une quelconque des revendications 3 à 11, dans lequel la résine est une résine thermodurcissable.

13. Produit stratifié selon la revendication 12, dans lequel la résine thermodurcissable est une résine vinylester.

14. Produit stratifié selon l'une quelconque des revendications 1 à 13, **caractérisé en ce qu'**il forme un anneau circonférentiel continu et fermé.

15. Utilisation d'un produit stratifié selon la revendication 14 comme élément de renforcement d'un bandage ou d'une roue non pneumatique.

## Patentansprüche

1. Schichtstoff (1), der eine verformbare Zellenstruktur bildet, **dadurch gekennzeichnet, dass** der Schichtstoff mindestens Folgendes umfasst:
○ eine obere Bahn (2) und eine untere Bahn (3), die beide gemäß derselben Hauptrichtung (X) ausgerichtet sind;
○ eine sich in der Richtung X erstreckende Reihe (5A, 5B, 5C) zylindrischer Strukturen (5), die zylindrische Verbindungsstrukturen genannt werden und nicht gemäß der Richtung X aneinandergesetzt sind, zwischen den zwei Bahnen, die die letzteren in Zonen (4) verbinden, die Verankerungszonen genannt werden,
und dass jede zylindrische Verbindungsstruktur (5) mehrere Grundzylinder (5a, 5b) umfasst, deren Mantellinie gemäß einer Achse Y ausgerichtet ist, die zu der Richtung X senkrecht ist, wobei die Grundzylinder ineinander gefügt sind und in jeder Verankerungszone (4) miteinander verbunden sind.

2. Schichtstoff nach Anspruch 1, wobei die Grundzylinder konzentrische Zylinder sind.

3. Schichtstoff nach Anspruch 1 oder 2, wobei die Grundzylinder Kompositzylinder sind, die Fasern umfassen, die in eine Harzmatrix eingebettet sind.

4. Schichtstoff nach Anspruch 3, wobei die Fasern unidirektionale Endlosfasern sind, die umlaufend in einer Ebene ausgerichtet sind, die zu der Achse Y senkrecht ist.

5. Schichtstoff nach einem der Ansprüche 1 bis 4, wobei die Fasern der Grundzylinder Glasfasern und/oder Kohlenstofffasern sind.

6. Schichtstoff nach einem der Ansprüche 1 bis 5, wobei die obere und die untere Bahn Fasern umfassen, die in eine Harzmatrix eingebettet sind.

7. Schichtstoff nach Anspruch 6, wobei die Fasern der Bahnen Endlosfasern sind.

8. Schichtstoff nach Anspruch 7, wobei die Endlosfasern der Bahnen unidirektional sind und parallel zu der Richtung X ausgerichtet sind.

9. Schichtstoff nach einem der Ansprüche 6 bis 8, wobei die Fasern der Bahnen Glasfasern und/oder Kohlenstofffasern sind.

10. Schichtstoff nach einem der Ansprüche 1 bis 9, wobei die zylindrischen Verbindungsstrukturen einen Außendurchmesser D aufweisen, der im Wesentlichen gemäß einer Richtung Z konstant ist, die lotrecht zu der Richtung X und der Achse Y ist, so dass die obere und die untere Bahn im Wesentlichen abstandsgleich gehalten werden.

11. Schichtstoff nach einem der Ansprüche 1 bis 10, wobei der durchschnittliche Abstand d, der gemäß der Richtung X gemessen wird, zwischen zwei aufeinander folgenden zylindrischen Verbindungsstrukturen derart ist, dass das Verhältnis d:D zwischen 0,10 und 0,50 liegt.

12. Schichtstoff nach einem der Ansprüche 3 bis 11, wobei das Harz ein Duroplastharz ist.

13. Schichtstoff nach Anspruch 12, wobei das Duroplastharz ein Vinylesterharz ist.

14. Schichtstoff nach einem der Ansprüche 1 bis 13, **dadurch gekennzeichnet, dass** es einen ununterbrochenen und geschlossenen Umfangsring bildet.

15. Verwendung eines Schichtstoffs nach Anspruch 14 als Verstärkungselement eines nicht pneumatischen Reifens oder Rades.

## Claims

1. Laminated product (1) that forms a deformable cellular structure, **characterized in that** it comprises at least:
○ an upper band (2) and a lower band (3) both oriented in the same main direction (X);
○ between the two bands and connecting the latter in zones (4) referred to anchoring zones, a series (5A, 5B, 5C) that extends in the direction X, of cylindrical structures (5) referred to connecting cylindrical structures that are non-touching in the direction X,
and **in that** each connecting cylindrical structure (5) comprises a plurality of elementary cylinders (5a, 5b) having their generatrix oriented along an axis Y perpendicular to the direction X, said elementary cylinders being fitted one inside the other and interconnected to one another in each anchoring zone (4).

2. Laminated product according to Claim 1, in which the elementary cylinders are concentric cylinders.

3. Laminated product according to Claim 1 or 2, in which the elementary cylinders are composite cylinders comprising fibres embedded in a resin matrix.

4. Laminated product according to Claim 3, in which the fibres are continuous and unidirectional, oriented circumferentially in a plane perpendicular to the axis Y.

5. Laminated product according to any one of Claims 1 to 4, in which the fibres of the elementary cylinders are glass fibres and/or carbon fibres.

6. Laminated product according to any one of Claims 1 to 5, in which the upper and lower bands comprise fibres embedded in a resin matrix.

7. Laminated product according to Claim 6, in which the fibres of the bands are continuous fibres.

8. Laminated product according to Claim 7, in which the continuous fibres of the bands are unidirectional, oriented parallel to the direction X.

9. Laminated product according to any one of Claims 6 to 8, in which the fibres of the bands are glass fibres and/or carbon fibres.

10. Laminated product according to any one of Claims 1 to 9, in which the connecting cylindrical structures have an outer diameter D that is substantially constant in a direction Z normal to the direction X and to the axis Y, so as to keep the upper and lower bands substantially equidistant.

11. Laminated product according to any one of Claims 1 to 10, in which the average distance d, measured in the direction X, between two consecutive connecting cylindrical structures is such that the ratio d/D is between 0.10 and 0.50.

12. Laminated product according to any one of Claims 3 to 11, in which the resin is a thermosetting resin.

13. Laminated product according to Claim 12, in which the thermosetting resin is a vinyl ester resin.

14. Laminated product according to any one of Claims 1 to 13, **characterized in that** it forms a continuous and closed circumferential ring.

15. Use of a laminated product according to Claim 14 as a reinforcing element for a non-pneumatic wheel or tyre.
